Europäisches Patentamt

European Patent Office

Office européen des brevets

(19)

(11) EP 0 744 009 B1

(12) **EUROPÄISCHE PATENTSCHRIFT**

(45) Veröffentlichungstag und Bekanntmachung des Hinweises auf die Patenterteilung:
**12.08.1998 Patentblatt 1998/33**

(21) Anmeldenummer: **95908188.6**

(22) Anmeldetag: **09.02.1995**

(51) Int Cl.⁶: **F16K 17/04**, F16K 17/06

(86) Internationale Anmeldenummer:
**PCT/DE95/00170**

(87) Internationale Veröffentlichungsnummer:
**WO 95/22025 (17.08.1995 Gazette 1995/35)**

(54) **MEHRSTUFIGES REGELVENTIL**

MULTI-STAGE REGULATING VALVE

VANNE DE REGULATION A ETAGES MULTIPLES

(84) Benannte Vertragsstaaten:
**DE FR GB IT**

(30) Priorität: **11.02.1994 DE 4404358**

(43) Veröffentlichungstag der Anmeldung:
**27.11.1996 Patentblatt 1996/48**

(73) Patentinhaber: **DAIMLER-BENZ AKTIENGESELLSCHAFT**
**70567 Stuttgart (DE)**

(72) Erfinder:
- **LEHMANN, Uwe**
  **D-55286 Wörrstadt (DE)**
- **STICH, Bodo**
  **D-65191 Wiesbaden (DE)**
- **WILHELM, Maik**
  **D-65468 Trebur (DE)**

(56) Entgegenhaltungen:
DE-A- 1 941 055          US-A- 2 890 715
US-A- 4 699 171

**Beschreibung**

Die vorliegende Erfindung betrifft ein mehrstufiges Regelventil mit einem Zylinder und einem darin geführten Stellkolben, welcher von einer Seite her durch einen Regeldruck beaufschlagbar ist und von der anderen Seite her durch die Kraft eines Rückstellelementes, z. B. einer Druckfeder, beaufschlagt wird, wobei der Kolben in Abhängigkeit vom Regeldruck mindestens eine Öffnung in der Wand des Zylinders nicht, teilweise oder ganz freigibt und so eine Strömungs- oder Druckverbindung unterbricht bzw. teilweise oder vollständig herstellt, und wobei der Kolben aus mindestens zwei jeweils mit dem Regeldruck beaufschlagbaren Teilkolben besteht, von denen ein erster Teilkolben von der Kraft des Rückstellelementes beaufschlagt ist. Derartige Ventile sind aus der hydraulischen Steuerungstechnik bekannt. So zeigt die US-A-4 699 171 Ventile, die einen Eingang und zwei Ausgänge haben (oder umgekehrt), wobei der Eingang wahlweise mit je einem der Ausgänge verbunden werden kann und diese Verbindung über Bohrungen oder dergleichen in dem Stellkolben hergestellt wird, so daß wahlweise je nach Verschiebung des Stellkolbens entweder der eine oder andere der Ausgänge mit dem Eingang verbunden ist, wobei gegebenenfalls auch weitere Verschiebepositionen des Stellkolbens vorgesehen sein können, in welchen beispielsweise keiner der Ausgänge oder aber beide mit dem Eingang verbunden sind.

Bewegt wird dabei der Kolben durch Einwirken eines Regeldruckes auf eine Stirnseite des Kolbens, während die andere Stirnseite von einem Rückstellelement, im allgemeinen einer Druckfeder, beaufschlagt wird. Dabei werden der wirksame, vom Regeldruck beaufschlagte Kolbenquerschnitt, die Federkonstante der Druckfeder und die Anordnung der Öffnungen und Verbindungskanäle so gewählt, daß in ganz bestimmten Bereichen des Regeldruckes ganz bestimmte, gewünschte Verbindungen zwischen Ein- und Ausgängen hergestellt werden. Es versteht sich, daß derartige Ventile prinzipiell eine große Anzahl verschiedener Ein- und Ausgänge aufweisen können, wobei die Verbindungen in dem jeweils gewünschten Druckbereich hergestellt werden. Auch der Anschluß für den Regeldruck kann als Eingang bzw. einer der Eingänge des Ventils Verwendung finden.

Neben der Schaltung und Unterbrechung bestimmter Verbindungen in hydraulischen oder pneumatischen Systemen, jeweils in Abhängigkeit von dem Wert eines Regeldruckes, ist oftmals auch eine bestimmte Charakteristik des Regelverhaltens bzw. des Ansprechens des Stellkolbens erwünscht. Ein Beispiel hierfür wäre eine plötzliche Änderung des Wertes der Federkonstanten des Rückstellelementes, wenn beispielsweise der Stellkolben eine bestimmte, vorgegebene Position erreicht hat. Eine solche Änderung der Federkonstanten kann man dadurch erreichen, daß mindestens zwei verschiedene Druckfedern als Rückstellelement dienen, wovon eine durch einen Anschlag zurückgehalten wird und erst dann in Eingriff mit dem Stellkolben tritt, wenn dieser die vorgegebene Position erreicht hat. Allerdings ist die Montage derartiger, mehrstufiger Rückstellelemente mitunter platzaufwendig und kompliziert und läßt auch nur eine relativ begrenzte Variation in der Regelcharakteristik zu.

Gegenüber diesem Stand der Technik liegt der vorliegenden Erfindung die Aufgabe zugrunde, ein mehrstufiges Regelventil mit den eingangs genannten Merkmalen zu schaffen, welches in einem weiten Bereich eine Änderung der Regelcharakteristik in Abhängigkeit von der Stellkolbenposition auch ohne Verwendung mehrerer Rückstellelemente ermöglicht.

Diese Aufgabe wird dadurch gelöst, daß ein Mitnehmer die Teilkolben derart miteinander verbindet, daß, zumindest in einem bestimmten Positionsbereich der Teilkolben, auch der zweite Teilkolben über den ersten Teilkolben und den Mitnehmer eine Rückstellkraft von dem Rückstellelement erfährt, daß der Zylinder mindestens einen Anschlag für den zweiten Teilkolben aufweist, welcher die Bewegung des zweiten Teilkolbens unter dem Einfluß des Regeldruckes und gegen die Wirkung des Rückstellelementes begrenzt, während der erste Teilkolben von diesem Anschlag unbeeinflußt bei einem weiteren Druckanstieg gegen das Rückstellelement bewegbar bleibt.

Der Mitnehmer wirkt also jeweils nur in einer Richtung, d.h. der zweite Kolben stützt sich über den Mitnehmer lediglich auf dem ersten Teilkolben ab und erfährt so auch die Kraft des Rückstellelementes, während der erste Kolben gegen die Kraft des Rückstellelementes auch gegenüber dem zweiten Teilkolben bewegbar bleibt, wenn der zweite Kolben gegen einen in dieser Richtung wirksamen Anschlag zur Anlage gekommen ist und der Druck auf den ersten Teilkolben ausreicht, um die in dieser Position wirksame Rückstellkraft zu überwinden.

Dies hat automatisch eine Änderung der Regelcharakteristik zur Folge, da nämlich in einem ersten Bewegungsbereich des Kolbens, nämlich dort, wo beide Kolben unter der Wirkung des Regeldruckes gegen die Kraft des Rückstellelementes bewegbar sind, die Summe der Stirnflächen der beiden Teilkolben dem Regeldruck ausgesetzt ist und die aus dem Produkt dieser Fläche und dem Regeldruck zu ermittelnde Kraft auf das Rückstellelement wirkt. Mit zunehmendem Druck werden dabei die beiden Teilkolben gegen das Rückstellelement verschoben, wobei dessen Rückstellkraft im allgemeinen linear mit dem Verschiebungsweg zunimmt. Sobald jedoch der zweite Teilkolben den erwähnten Anschlag erreicht hat, kann er nicht mehr zu einer weiteren Kraftübertragung auf das Rückstellelement und damit zur weiteren Bewegung des ersten Teilkolbens beitragen. Damit sich der erste Teilkolben weiter gegen die Kraft des Rückstellelementes verschiebt, muß nunmehr der allein auf die Stirnfläche dieses ersten Teilkolbens aufgebrachte Regeldruck so groß sein, daß die resultierende Kraft mindestens gleich der Kraft des Rückstellelementes in dieser Position ist, wobei diese Kraft bis dahin über den auf die Gesamtfläche beider Teilkolben wirkenden Regeldruck aufgebracht wurde. Dies bedeutet, daß, bevor sich der erste Teilkolben gegen das Rückstellelement weiter in Bewegung setzt, der Druck zunächst auf einen höheren Wert ansteigen muß, bis der Verlust an wirksamer Kolbenfläche durch den Anschlag des zweiten Teilkolbens kompensiert ist. Es findet also bei Erreichen des Anschlages durch den zweiten Teilkolben bei einem Druck P1 bis zu einem höheren Druck P2 keine weitere Kolbenbewegung mehr statt, wobei diese beiden Druckwerte mit den wirksamen Kolbenflächen durch die Beziehung verknüpft sind:

$$\frac{P2}{P1} = \frac{F1 + F2}{F1}$$

wobei F1 die vom Druck beaufschlagte, wirksame Fläche des ersten Teilkolbens und F2 die entsprechende Fläche des zweiten Teilkolbens ist.

Es versteht sich, daß sich die vorstehend erläuterten Prinzipien grundsätzlich auch auf eine größere, prinzipiell beliebige Anzahl von Teilkolben ausdehnen läßt, die stufenweise über nur in einer Richtung wirksame Mitnehmer verbunden sind und abgestuft Anschläge aufweisen, so daß die einzelnen Teilkolben nacheinander zum Anschlag gelangen, wobei nach einem Anschlag eines Teilkolbens zunächst eine weitere Kolbenbewegung unterbleibt, bis eine höhere Druckstufe erreicht worden ist. In einem Diagramm, welches auf der vertikalen Achse die Bewegung des ersten, mit dem Rückstellelement unmittelbar in Verbindung stehenden Teilkolbens gegenüber dem Anstieg des Regeldruckes zeigt, würde man also eine Art Treppenfunktion erhalten. Dabei ist die Höhe der Stufen und ihre Breite durch die Wahl der Position von Anschlägen und durch die Wahl bestimmter Querschnittsflächen der einzelnen Teilkolben in weiten Grenzen variierbar. Auf diese Weise ist es möglich, die Regelcharakteristik eines solchen Regelventils relativ gut an einen gewünschten, optimalen Verlauf anzupassen, ohne daß aufwendige und empfindliche Meß- und Regelsysteme erforderlich sind. Dabei ist zwar weiterhin auch die Verwendung mehrerer, getrennter Rückstellelemente mit abgestimmter Rückstellkraft für jeden einzelnen Teilkolben möglich, jedoch dürfte sich eine solche Maßnahme in den meisten Fällen allein durch eine passende Wahl der Querschnittsflächen der Teilkolben erübrigen.

Während es einerseits möglich ist, die verschiedenen Teilkolben nebeneinander, erforderlichenfalls auch in getrennten Zylindern anzuordnen und durch die erwähnten Mitnehmer miteinander zu verbinden, so ist dennoch eine Ausführungsform der Erfindung bevorzugt, bei welcher die Teilkolben konzentrisch zueinander als mindestens ein äußerer und ein innerer Teilkolben vorgesehen und teleskopartig ineinander verschiebbar sind.

Soweit nicht ausdrücklich anders angegeben, soll im folgenden zunächst nur die einfachste Version eines solchen Systems aus konzentrischen Teilkolben beschrieben werden, die aus nur einem äußeren und einem inneren Teilkolben besteht, wobei Erweiterungen auf eine größere Anzahl von Teilkolben in völlig analoger Weise weiterzudenken sind.

In einer ersten Variante der Erfindung ist dabei vorgesehen, daß der äußere Teilkolben von einem Rückstellelement, wie z.B. einer Druckfeder beaufschlagt wird und daß für den inneren Kolben ein Anschlag an einem von einem Boden des Zylinders ausgehenden Zapfen vorgesehen ist. Diese Variante hat den Vorteil, daß man dabei, wie man noch sehen wird, auf eine Bohrung in der Wand des äußeren Teilkolbens verzichten kann, wobei allerdings nach dem Anschlag des inneren Teilkolbens der äußere sich in dem zwischen diesem inneren Kolben und der Zylinderwand gebildeten Ringraum weiterbewegen muß, was eventuell Passungsprobleme mit sich bringen kann und auf jeden Fall hohe Anforderungen an die Herstellung und den konstruktiven Aufbau des Ventils stellt.

Bei einer anderen Variante der Erfindung ist vorgesehen, daß der innere Teilkolben z.B. durch eine Druckfeder als Rückstellelement beaufschlagt wird, wobei die Wand des äußeren Kolbens in dem von dem Innenkolben freigebbaren Bereich eine radiale Öffnung aufweist, und wobei auch der Zylinder zwei axial beabstandete Öffnungen hat, von denen eine in der Anschlagposition des äußeren Kolbens mit der Öffnung in der Kolbenwand fluchtet, während die andere während der Bewegung des äußeren Kolbens in Richtung auf den Anschlag von dem äußeren Kolben freigegeben wird.

Wie bereits erwähnt, läßt sich eine solche Ausführungsform auch ohne weiteres auf mehr als zwei Teilkolben ausdehnen, wobei z.B. drei relativ zueinander teleskopartig verschiebbare und jeweils durch einen Mitnehmer verbundene Teilkolben vorgesehen sein können, von denen der äußere in seiner Wand zwei axial beabstandete Öffnungen aufweist, während der mittlere eine derartige Öffnung aufweist, die in den beiden Anschlagpositionen des äußeren und mittleren Teilkolbens jeweils mit einer der Öffnungen des äußeren Kolbens und mit einer der Öffnungen in der Zylinderwand fluchtet. Die Zylinderwand hat dann drei Öffnungen, die nacheinander durch die Bewegung aller drei Kolben, in diesem Fall durch den oberen Rand des äußeren Teilkolbens, und anschließend durch die beiden inneren Teilkolben, und zwar in diesem Fall über den Rand des mittleren Teilkolbens und durch zwei miteinander fluchtende Öffnungen in dem äußeren Teilkolben und der Zylinderwand, und schließlich durch den inneren Teilkolben, und zwar durch dessen oberen Rand und wiederum zwei weitere miteinander fluchtende Öffnungen in der Zylinderwand und im äußeren Kolben, die außerdem noch mit einer Öffnung im mittleren Teilkolben fluchten.

Als Anschlag können bei den vorgenannten Ausführungsformen in zweckmäßiger Weise stufenartige Verjüngungen der Zylinderinnenwand vorgesehen werden.

Außerdem ist es zweckmäßig, wenn bei derartigen, teleskopartig ineinander verschobenen Teilkolben Einrichtungen vorgesehen werden, welche eine relative Verdrehung mindestens des äußeren Teilkolbens gegenüber der Zylinderwand verhindern, um sicherzustellen, daß die jeweiligen Bohrungen miteinander fluchtend ausgerichtet werden können. Es versteht sich, daß die betreffenden Bohrungen im Prinzip eine beliebige Querschnittsform haben können, also insbesondere auch sich in Längsrichtung der Kolben und Zylinderwände oder in deren Umfangsrichtung erstreckende Langlöcher sein können.

Alternativ oder zusätzlich hierzu können an der Innenfläche der Zylinderwand (oder an der Außenwand des betreffenden Kobens), jeweils in axialer Höhe der Öffnungen, ringförmig umlaufende Nuten vorgesehen werden, die auch bei einer relativen Verdrehung zwischen den Öffnungen von Teilkolben und Zylinder eine Verbindung zwischen diesen Öffnungen herstellen. Dieses Konzept der Ringnuten kann bei Verwendung von mehr als zwei Teilkolben auch auf die miteinander in Gleitberührung stehenden Führungsflächen der einzelnen Kolben erweitert werden.

Weiterhin erscheinen Varianten des erfindungsgemäßen Regelventiles zweckmäßig, bei welchen der bzw. die äußeren Teilkolben so ausgebildet sind, daß sie nach der Freigabe einer ersten Öffnung in der Zylinderwand während ihrer Bewegung in Richtung auf den Anschlag diese Öffnung durch weitere Wandabschnitte wieder verschließen, wenn, bzw. kurz bevor sie die jeweilige Anschlagposition erreichen, in welcher eine Öffnung in der Kolbenwand mit einer weiteren Öffnung in der Zylinderwand fluchtet.

Weitere Vorteile, Merkmale und Anwendungsmöglichkeiten der vorliegenden Erfindung werden deutlich anhand der folgenden Beschreibung bevorzugter Ausführungsformen und der dazugehörigen Figuren. Es zeigen:

Figur 1    eine erste Ausführungsform eines mehrstufigen Regelventils,

Figur 2    eine zweite Ausführungsform mit einem dreiteiligen Stellkolben,

Figur 3    eine dritte Ausführungsform, bei welcher gegenüber der Ausführungsform gemäß Figur 1 die Rolle des inneren und äußeren Teilkolbens vertauscht ist,

Figur 4    eine Ausführungsform ähnlich der in Figur 3, jedoch mit einem längeren und durchbohrten äußeren Teilkolben, und

Figur 5    Beispiele für den sich bei Verwendung derartiger Ventile ergebenden Druckverlauf.

Grundsätzlich ist zu allen Figuren zu bemerken, daß sie lediglich schematische Darstellungen sind und daß die konkreten Abmessungen und insbesondere auch die räumliche Anordnung äußerer Anschlüsse in der Praxis deutlich von den dargestellten Ausführungsformen abweichen. Soweit jedoch konkrete relative Abmessungen und Positionen einzelner Elemente eine Rolle spielen, wird dies ausdrücklich beschrieben.

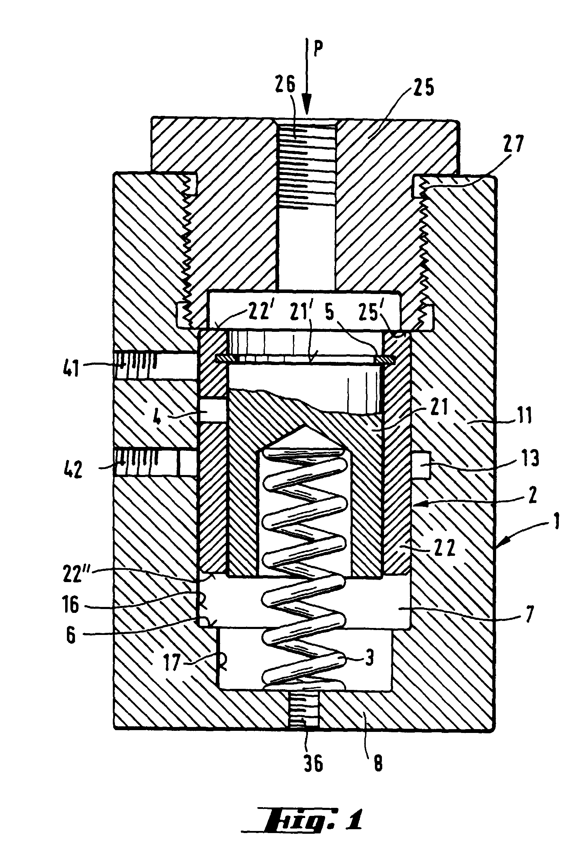

Man erkennt in Figur 1 einen Zylinder 1 mit einer Sackbohrung 7, einer Wand 11, einem Boden 8 an einer Stirnseite und einem Gewindestopfen 25 auf der gegenüberliegenden Stirnseite. Die im Zylinder 1 befindliche Sackbohrung 7 ist mehrfach im Durchmesser abgestuft und weist im Bereich des Stopfens 25 einen Gewindeabschnitt mit Innengewinde 27 auf. Der den Stellkolben 2 führende Durchmesserbereich 16 ist gegenüber dem Gewindeabschnitt 27 etwas verjüngt und weist im Abstand zum Boden 8 eine Abstufung zu einem sich noch weiter verjüngten Durchmesserbereich 17 auf, wobei diese Abstufung einen Anschlag 6 für den äußeren Teilkolben 22 des Stellkolbens 2 bildet.

Im Rahmen der Erfindung ist es auch möglich, die Sackbohrung 7 als Durchgangsbohrung auszubilden, die mittels eines Stopfens verschlossen ist. Der sich verjüngende Durchmesserbereich 17 und der Anschlag 6 können hierbei durch separate Teil oder durch entsprechende Formgebung des Stopfens gebildet sein.

Der zweiteilige Stellkolben 2 besteht im wesentlichen aus einem inneren Teilkolben 21 und einem äußeren Teilkolben 22, die über einen Mitnehmer 5 in Form eines in der Innenfläche des Teilkolbens 22 eingelassenen Federringes aufweist. Der äußere Teilkolben 22 ist somit ein hohlzylindrisches Teil, in welchem der innere Teilkolben 21 gleitbar geführt ist. Der Mitnehmer 5 begrenzt die Gleitbewegung des inneren Teilkolbens 21 in Richtung des Gewindestopfens 25. Der Stopfen 25 weist eine Bohrung als Druckanschluß für einen Druckanschluß 26 auf, durch welchen der Regeldruck P zugeführt wird. Dieser Regeldruck P wirkt sowohl auf die ringförmige obere Stirnfläche 22' des äußeren Teilkolbens 22 als auch auf die kreisförmige obere Stirnfläche 21' des inneren Teilkolbens 21. Der innere Teilkolben 21 ist dabei allerdings unmittelbar durch eine in der Sackbohrung angeordnete Druckfeder 3 gegen die Richtung der von dem Regeldruck P auf die Stirnfläche 21', 22' der beiden Teilkolben 21, 22 gerichtete Kraft vorgespannt, wobei im mechanischen Gleichgewicht diese Vorspannkraft durch die vom Regeldruck auf die andere Seite des Teilkolbens 21 und, über den Mitnehmer 5, auch auf die druckseitige Stirnfläche des äußeren Teilkolbens 22 wirkende Kraft kompensiert wird. Der äußere Teilkolben 22 weist zwar keine eigene Rückstellfeder auf, könnte jedoch, ausgehend von einem drucklosen Zustand und sofern der Stellweg der Feder nicht ausreicht, um beide Teilkolben 21, 22 in Eingriff miteinander bis an ihren Endanschlag zu bewegen, unter der Wirkung des von außen kommenden Regeldruckes P nur soweit ohne Gegenkraft bewegt werden, bis der Mitnehmer 5 an der Stirnseite 21' des inneren Teilkolbens 21 anschlägt, so daß also die Rückstellkraft der Druckfeder 3 nicht nur auf den inneren Teilkolben 21, sondern über den Mitnehmer 5 auch auf den äußeren Teilkolben 22 wirkt. Die Druckfeder 3 ist dabei im allgemeinen so bemessen, daß bei sehr niedrigem Regeldruck P oder auch schon im drucklosen Zustand die Stirnfläche 21' des inneren Teilkolbens 21 gegen den Mitnehmer 5 anschlägt und den äußeren Teilkolben 22 bis zu dem als Anschlag wirkenden ringförmig ausgebildeten unteren Rand 23' des Stopfens 25 andrückt.

Mit zunehmendem Regeldruck P wächst die auf die Stirnflächen 21', 22' der Teilkolben 21 und 22 wirkende Kraft und wird bei einem von der konkreten Wahl der Druckfeder 3 abhängigen Druck PO die in dieser Position von der Druckfeder 3 ausgeübte Kraft überwiegen. Damit beginnen beide Teilkolben 21, 22 sich gemeinsam als Einheit abwärts zu bewegen, da der Teilkolben 22 kein eigenes Rückstellelement aufweist, jedoch über den Mitnehmer 5 an den inneren Teilkolben 21 gekoppelt ist. Mit zunehmendem Regeldruck P findet eine weitere Bewegung der Teilkolben 21, 22 gegen die Wirkung der Druckfeder 3 statt, wobei diese Bewegung entsprechend der Darstellung in allen vier Figuren jeweils abwärts gerichtet ist, ohne daß hiermit die Einbaulage der Ventile in eirgendeiner Weise festgelegt werden soll. Dabei gibt der obere Rand 22' des äußeren Teilkolbens 22 die Ausgangsöffnung 41 in der Wand 11 des Zylinders 1 zunächst teilweise und schließlich ganz frei, so daß der Druckanschluß 26 und die Ausgangsöffnung 41 nunmehr eine durchgehende Verbindung über das Druckmedium haben. Das Druckmedium kann dabei entweder von Druckanschluß 26 zur Ausgangsöffnung 41 strömen oder aber lediglich eine statische Druckbeaufschlagung der an die Ausgangsöffnung 41 anschließenden (nicht dargestellten) Elemente bewirken.

Bei einer weiteren Abwärtsbewegung beginnen schließlich auch die Bohrung 4 des Teilkolbens 22 und die zweite Ausgangsöffnung 42 in der Zylinderwand 11 sich zu überlappen und fluchten schließlich genau miteinander, wenn die untere, ringförmige Stirnfläche 22" des Teilkolbens 22 den durch die Abstufung gebildeten Anschlag 6 erreicht. Dabei können die Ausgangsöffnungen 41, 42 und die Bohrung 4, die oberen und unteren Stirnflächen 22', 22" des Teilkolbens 22 und der Anschlag 6 weitgehend beliebig angeordnet werden, so daß beispielsweise die Überlappung der Bohrung 4 und der Ausgangsöffnungen 42 gleichzeitig mit der Freigabe der Ausgangsöffnung 41 durch den oberen Rand 22' des Teilkolbens 22 geschieht, oder daß diese Überlappung erst verzögert auftritt. Dabei brauchen im übrigen die Bohrung 4 und die Ausgangsöffnungen 42 beim Anschlag des Teilkolbens 22 an den Anschlag 6 in Umfangsrichtung nicht miteinander zu fluchten, sondern müssen lediglich im wesentlichen auf gleicher axialer Höhe liegen bzw. sich in axialer Richtung überlappen. Zu diesem Zweck ist an der Innenwand der Sackbohrung 7 eine umlaufende Ringnut 13 vorgesehen, welche auf jeden Fall die Verbindung zwischen der Bohrung 4 und der Ausgangsöffnung 42 herstellt, wenn diese in axialer Richtung auf gleicher Höhe liegen bzw. sich in axialer Richtung überlappen.

Wenn jedoch der äußere Teilkolben 22 z.B. bei einem Druck P1 gerade den Anschlag 6 erreicht, ist die Bohrung 4 von der Innenseite des Teilkolbens 22 her noch durch den inneren Teilkolben 21 abgedeckt bzw. verschlossen, da dieser nach wie vor mit seiner Stirnfläche 21' mit dem Mitnehmer 5 in Eingriff steht (in Figur 1 ist nur der untere Teil des inneren Teilkolbens 21 im Schnitt dargestellt, der im übrigen bis an den Mitnehmer 5 heranreicht).

Nimmt der Regeldruck P jetzt noch weiter zu, so wird die aufgrund dieses Druckes auf den äußeren Teilkolben 22 wirkende Kraft von dem Anschlag 6 aufgefangen und kann mithin nicht über den Mitnehmer 5 auf den Teilkolben 21 übertragen werden.

Die Druckkraft, um die Rückstellkraft der Feder 3 in dieser Position zu überwinden, muß jetzt ausschließlich von dem Teilkolben 21 aufgebracht werden, dessen obere Stirnfläche 21' jedoch offensichtlich kleiner ist als die vorher wirksame Stirnfläche 21', 22' der Teilkolben 21 und 22 zusammen. Dieser Flächenverlust muß also durch einen Druckanstieg bis auf einen Druck P2 kompensiert werden, bei welchem nunmehr der Teilkolben 21 beginnt, sich von dem Mitnehmer 5 zu lösen und weiter gegen die Rückstellkraft der Druckfeder 3 zu bewegen. Dabei sind die Drücke P1 und P2 mit den Stirnflächen F1 und F2 des inneren bzw. äußeren Teilkolbens 21, 22 über die Beziehung verknüpft:

$$\frac{P2}{P1} = \frac{F1 + F2}{F1}$$

mit:

P1 = Druck, bei welchem der äußere Teilkolben 22 gerade den Anschlag 6 erreicht
P2 = Druck, bei welchem der innere Teilkolben 21 beginnt, sich von dem Mitnehmer 5 zu lösen
F1 = vom Druck beaufschlagte, wirksame Stirnfläche 21' des inneren Teilkolbens 21 und
F2 = vom Druck beaufschlagte, wirksame Stirnfläche 22' des äußeren Teilkolbens 22.

Bei einem weiteren Anstieg des Druckes über den Wert P2 hinaus setzt also der Teilkolben 21 seine Abwärtsbewegung weiter fort und kann so schließlich auch die Bohrung 4 von innen her freigeben, so daß dann auch die Ausgangsöffnung 42 über die Bohrung 4, gegebenenfalls auch über die umlaufende Ringnut 13, mit dem Druckanschluß 26 in Verbindung steht.

Bei einer nicht dargestellten Variante sind der äußere Teilkolben 22 und der entsprechende zylindrische Druckmesserbereich 16 etwas länger nach oben in Richtung Gewindestopfen 25 ausgeführt und anstelle des oberen Randes des Teilkolbens 22 als die Ausgangsöffnung 41 freigenbendes Element ist oberhalb des Mitnehmers 5 lediglich eine weitere Bohrung in der Wand des äußeren Teilkolbens 22 vorgesehen, die bei der Abwärtsbewegung des äußeren Teilkolbens 22 (bzw. beider Teilkolben 21, 22 gemeinsam) die Verbindung des Druckanschlusses 26 mit der Ausgangsöffnung 41, gegebenenfalls unter Zwischenschaltung der weiteren Ringnut, herstellt. Bei fortgesetzter Abwärtsbewegung des äußeren Teilkolbens 22 wird jedoch diese Verbindung durch den oberen Rand der weiteren Bohrung wieder unterbrochen, so daß diese oberhalb des Mitnehmers 5 angeordnete, zusätzliche Bohrung bei Erreichen des Anschlages 6 der unteren Stirnfläche 22" des Teilkolbens 22 auf dem Anschlag 6 in etwa die Position einnimmt, die in Figur 1 von der Bohrung 4 eingenommen wird. Auf diese Weise erreicht man einen Umschalteffekt, d.h. ausgehend von einer Unterbrechung der Verbindungen zwischen den Ausgangsöffnungen 41, 42 mit dem Druckanschluß 26 entsprechend der in Figur 1 dargestellten Situation, kommt es nach einem Druckanstieg zunächst zu einer Verbindung der Ausgangsöffnung 41 mit dem Druckanschluß 26 und anschließend zu einer Verbindung der Ausgangsöffnung 42 mit dem Druckanschluß 26, wobei die Verbindung zu der Ausgangsöffnung 41 wieder unterbrochen wird.

Dabei kann je nach Anordnung und Maß der betreffenden Bohrungen 4, der Ausgangsöffnungen 41 und 42 sowie der zusätzlich oberhalb des Mitnehmers 5 anzubringenden weiteren (nicht dargestellten) Bohrung in der Wand 11 des äußeren Teilkolbens 22 wahlweise ein fließender Übergang erreicht werden, bei welchem in einem Zwischendruckbereich bereits eine teilweise Verbindung zwischen der Ausgangsöffnung 42 und dem Druckanschluß 26 hergestellt ist, während auch die Verbindung zwischen der Ausgangsöffnung 41 und dem Druckanschluß 26 noch besteht, jedoch kann die Anordnung auch so erfolgen, daß zunächst die Verbindung zwischen der Ausgangsöffnung 41 und dem Druckanschluß 26 unterbunden wird, bevor eine Verbindung zwischen der Ausgangsöffnung 42 und dem Druckanschluß 26 entsteht.

Es versteht sich, daß die Ausgangsöffnungen 41, 42 nicht an der Außenwand des Zylinders 1 münden müssen, sondern daß entsprechende Anschlüsse auch stirnseitig, beispielsweise am Boden, vorgesehen werden können, wobei außerdem auch Anschlußnippel oder -gewinde für diese Anschlüsse vorgesehen werden können.

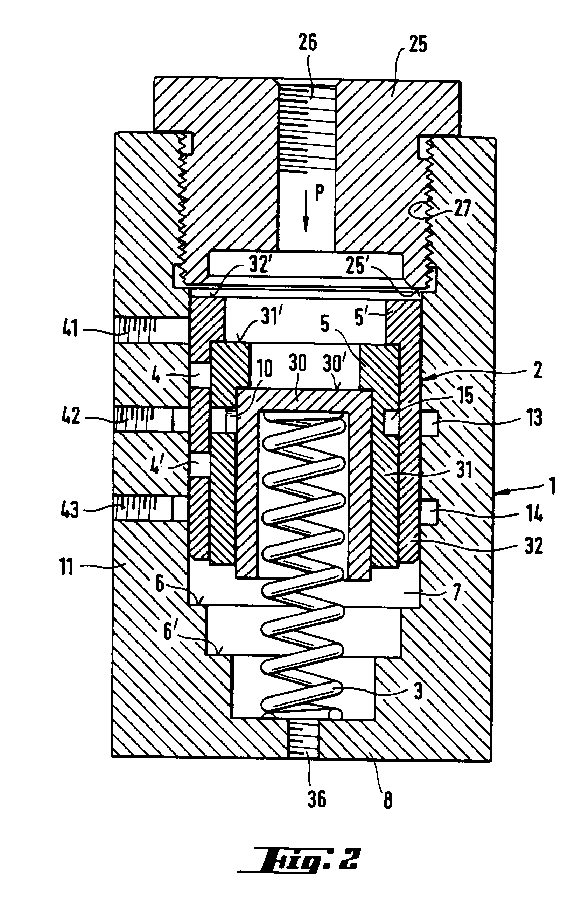

Die Ausführungsform gemäß Figur 2 folgt exakt demselben Funktionsprinzip wie die im Zusammenhang mit Figur 1 beschriebene Ausführungsform, mit dem Unterschied, daß hier der Stellkolben 2 aus drei koaxial zueinander angeordneten und teleskopartig ineinander verschiebbaren Teilkolben 30, 31 und 32 besteht. Auch hier ist wiederum der innere Teilkolben 30 von einer Druckfeder 3 als Rückstellelement beaufschlagt und die Mitnehmer 5 bzw. 5' sind jeweils als nach innen ragender Bund oder Flansch am oberen Rand des mittleren Teilkolbens 31 bzw. des äußeren Teilkolbens 32 ausgebildet. Diese Mitnehmer sind nicht notwendigerweise am oberen Rand dieser Teilkolben angeordnet, sondern können an irgendeiner beliebigen axialen Höhe der Teilkolben vorgesehen sein.

Entsprechend dem gegenüber der Ausführungsform der Figur 1 zusätzlich vorgesehenen Teilkolben 32 und damit einer zusätzlichen Regelstufe sind in diesem Fall eine zusätzliche Ausgangsöffnung 43 in der Zylinderwand 11 vorgesehen, insgesamt somit die Ausgangsöffnungen 41, 42, 43. Der äußere zusätzliche Teilkolben 32 weist deshalb notwendigerweise zwei Bohrungen 4, 4' anstelle der einen Bohrung 4 der Ausführungsform nach Figur 1 auf. Außerdem weist auch der mittlere Teilkolben 31 eine Bohrung 10 auf. Die zylindrische Sackbohrung 7 des Zylinders 1 ist zweifach abgestuft unter Bildung zweier Anschläge 6 bzw. 6' für den äußeren bzw. mittleren Teilkolben 32, 31. Die drei Teilkolben 30, 31, 32 werden ebenfalls über den Anschluß 26 mit Druck beaufschlagt und bewegen sich zunächst gemeinsam abwärts, bis der obere Rand 32' des Teilkolbens 32 die Ausgangsöffnung 41 freigibt und der Teilkolben 32 anschließend an den Anschlag 6 anstößt.

Die Bohrungen 4, 4' des äußeren Teilkolbens 32 liegen mit den Ausgangsöffnungen 42, 43 bzw. mit den Ringnuten 13 bzw. 14 gleichzeitig auf gleicher axialer Höhe. In dieser Position kann sich der mittlere Teilkolben 31 gemeinsam mit dem inneren Teilkolben 30 bei einem weiteren Druckanstieg noch weiter abwärts bewegen, so daß der obere Rand 31' des mittleren Teilkolbens 31 schließlich die Öffnung 4 freigibt, die, wie bereits erwähnt, mit der Ausgangsöffnung 42 in Verbindung steht. Somit ist bei Erreichen eines entsprechenden Druckwertes die Verbindung zwischen der Ausgangsöffnung 42 und dem Druckanschluß 26 hergestellt. Schließlich erreicht auch der mittlere Teilkolben 31 den Anschlag 6', wobei wiederum die Bohrung 10 auf derselben axialen Höhe liegt wie die Bohrung 4'. In dieser Position fluchten die Bohrung 10, 4' mit der Ausgangsöffnung 43. Steigt der Druck weiter an, so verschiebt sich der innere Teilkolben 30 weiter, bis seine Oberkante 30' die Verbindung zwischen dem Druckanschluß 26 und der Bohrung 10, 4' erreicht. Analog zu den Ringnuten 13 und 14 kann auch in der Innenwand des äußeren Teil kolbens 32 oder in der Außenwand des mittleren Teilkolbens 31 auf Höhe der Bohrung 4' (bzw. 10) eine umlaufende Ringnut 15 vorgesehen sein. Ringnuten sind grundsätzlich für den Fall vorzusehen, daß die Kolben nicht gegen Verdrehen gesichert sind. Analog zu der vorherigen Beschreibung einer nicht dargestellten Variante zu Figur 1 können auch hier die Teilkolben 31, 32 nach oben über die Mitnehmer 5, 5' hinaus verlängert sein und die Funktion der Ränder, welche die einzelnen Öffnungen freigeben, kann wieder durch entsprechende Bohrungen in der Wand der Teilkolben übernommen werden, so daß nach der Freigabe der einzelnen Ausgangsöffnungen 41, 42, 43, die sukzessive von oben nach unten erfolgt, bei einem entsprechenden Druckanstieg auch das Verschließen der Ausgangsöffnungen 41, 42, 43 wieder bewirkt werden kann, wenn, oder bevor die Verbindung des Druckanschlusses 26 zu der nächstfolgenden Ausgangsöffnung (42 oder 43) hergestellt wird.

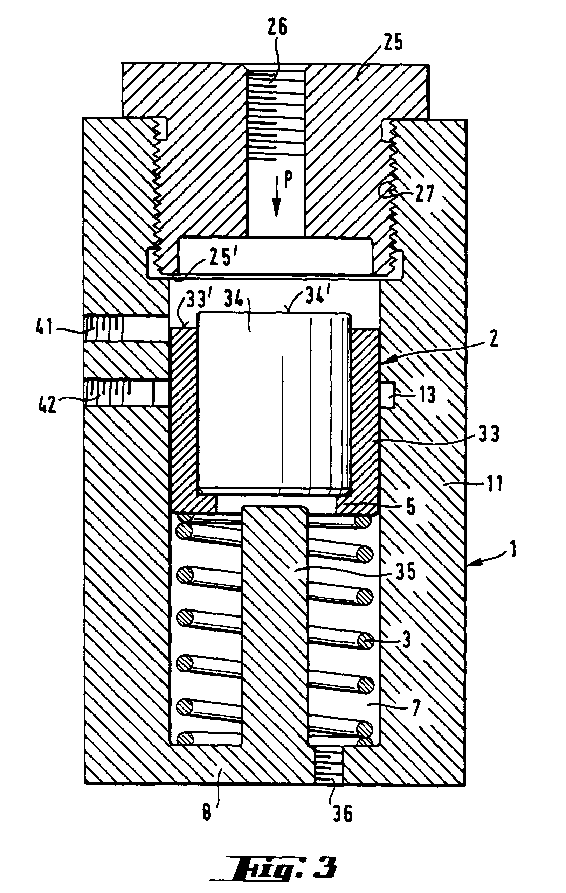

Figur 3 zeigt eine weitere Variante, bei welcher auf eine Bohrung in dem äußeren Teilkolben 33 ganz verzichtet werden kann oder wobei die Zahl der Bohrungen in einem (bzw. den) äußeren Teilkolben 33 zumindest reduziert werden kann. In diesem Fall ist der erste, von der als Rückstellelement dienenden Druckfeder 3 beaufschlagte Teilkolben der äußere Teilkolben 33. Der innere Teilkolben 34 wirkt nur über einen Mitnehmer 5, der als radial einwärts ragender Bund am unteren Rand des äußeren Teilkolbens 33 ausgebildet ist, auf die Druckfeder 3. Der Druckanschluß 26 ist wiederum an einem Gewindestopfen 25 vorgesehen und wirkt auf die Stirnflächen 33', 34' beider Teilkolben 33, 34, wobei unter der Wirkung des Regeldruckes P beide über den Mitnehmer 5 miteinander in Eingriff stehende Teilkolben 33, 34 sich gemeinsam abwärts bewegen und dabei, wie in Figur 3 dargestellt, allmählich die Ausgangsöffnung 41 freigeben und so deren Verbindung zu dem Anschluß 26 herstellen.

Der zentrale Zapfen 35, der vom Boden 8 des Zylinders 1 in die Sackbohrung 7 hineinragt und von der Feder 3 umschlossen wird, begrenzt den Weg des inneren Teilkolbens 34. Bei einem hinreichenden Druckanstieg erreicht der innere Teilkolben 34 schließlich den Anschlag des Zapfens 35, so daß seine weitere Abwärtsbewegung nunmehr gestoppt ist und die Kraft für ein weiteres Zusammendrücken der Druckfeder 3 allein von dem auf die ringförmige Stirnfläche 33' des äußeren Teilkolbens 33 wirkende Druckkraft aufgebracht werden muß. Erst wenn durch einen entsprechenden Druckanstieg dieser effektive Verlust an wirksamer Stirnfläche des Stellkolbens 2 kompensiert ist, bewegt sich der äußere Teilkolben 33 weiter abwärts und kann schließlich auch die Ausgangsöffnung 42 für eine Verbindung mit dem Druckanschluß 26 freigeben. Wie man erkennt, ist in diesem Fall und im Gegensatz zu der Ausführungsform gemäß Figur 1 keine der Bohrung 4 entsprechende Bohrung in dem äußeren Teilkolben 33 erforderlich und anstelle einer möglicherweise vorzusehenden weiteren Bohrung, um nach dem Freigeben der ersten Ausgangsöffnung 41 auch wieder deren Verschließen bewirken zu können, wäre im Falle der Ausführungsform der Figur 3 lediglich eine einzige Bohrung erforderlich.

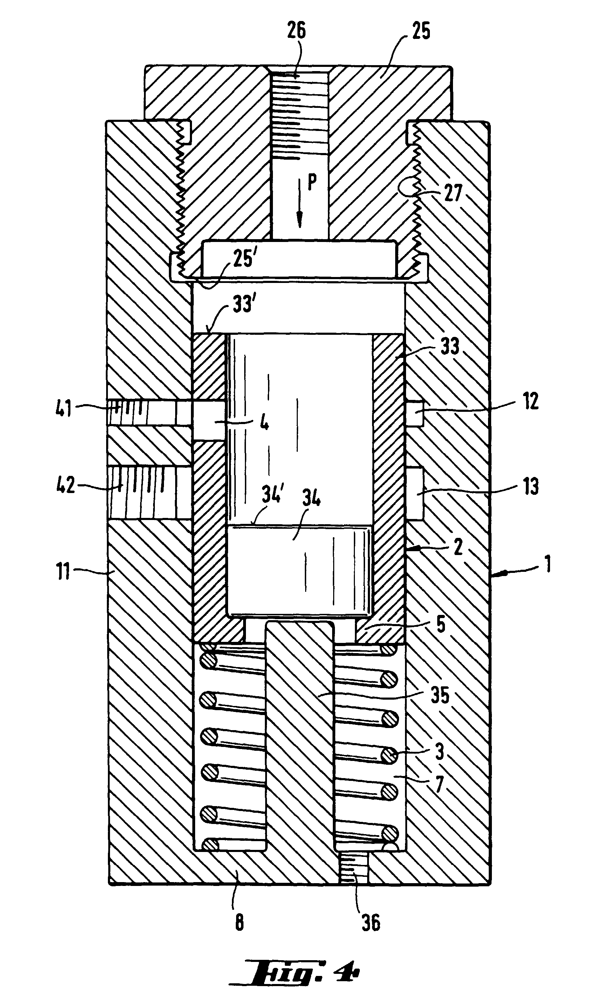

Eine solche Variante ist in Figur 4 dargestellt. Die äußere Zylinderwand weist zwei Ausgangsöffnungen 41, 42 auf und der mittlere Teilkolben hat lediglich eine Durchgangsbohrung 4.

Ähnlich wie bei der Ausführungsform gemäß Figur 3 werden auch hier mit steigendem Druck zunächst beide Kolben, nämlich der Zentralkolben 34 und der äußere Teilkolben 33 gemeinsam abwärts gedrückt, wobei schließlich die Durchgangsbohrung 4 mit der Ausgangsöffnung 41 zur Deckung kommt und eine Verbindung der Ausgangsöffnung 41 zu dem Druckanschluß 26 herstellt. Der innere Teilkolben 34 gelangt schließlich in Anschlag mit dem zentralen Zapfen 35, und der äußere Teilkolben 33 wird sich dementsprechend erst dann weiterbewegen, wenn der Druck allein auf seine Stirnfläche 33' ausreicht, um die von der Feder 3 bereitgestellte Gegenkraft zu überwinden. Wie man sieht, wird jedoch bei einer weiteren Abwärtsbewegung des mittleren Teilkolbens 33 die Ausgangsöffnung 41 wieder verschlossen und nach einer weiteren Abwärtsbewegung, gleichzeitig mit oder nach dem Verschluß der Ausgangsöffnung 41, kommt schließlich die Durchgangsbohrung 4 mit der weiteren Ausgangsöffnung 42 zur Deckung und stellt die Verbindung der Ausgangsöffnung 42 zum Druckanschluß 26 her. Schließlich kann jedoch auch die Verbindung zwischen Druckanschluß 26 und Ausgangsöffnung 41 wieder hergestellt werden, wenn der Teilkolben 33 sich soweit abwärtsbewegt, daß sein oberer Rand die Ausgangsöffnung 41 wieder freigibt.

Es versteht sich, daß man durch die Position und Größe der Durchgangsbohrung 4, insbesondere ihren Abstand von dem oberen Rand des Teilkolbens 33, und durch die Lage und Größe der Ausgangsöffnungen 41 und 42 sowie die Lage der Anschläge festlegen kann, ob beispielsweise immer nur eine der beiden Ausgangsöffnungen 41, 42 eine Verbindung mit dem Druckanschluß haben kann oder ob bei bestimmten Druckzuständen auch beide Ausgangsöffnungen 41, 42 mit dem Druckanschluß 26 verbunden sein können.

Auch hier können selbstverständlich wieder an der zylindrischen Innenwand des Zylinders 1 ringförmig umlaufende Nuten 12, 13 auf axialer Höhe der Ausgangsöffnungen 41, 42 vorgesehen werden, die jedoch nur erforderlich sind, wenn die Verbindung zu den Ausgangsöffnungen 41, 42 über Bohrungen in der Wand des äußeren Teilkolbens 33 hergestellt werden sollen und wenn man spezielle Maßnahmen zur Ausrichtung von Teilkolben 34 und Zylinder 1 in Umfangsrichtung vermeiden will.

Üblicherweise sind im Gehäuse des Zylinders 1 auf der druckabgewandten Kolbenseite Entlastungsbohrungen 36 vorgesehen. Desweiteren kann über die Entlastungsbohrungen 36 noch ein zusätzlicher Druck zur Unterstützung der Feder aufgebracht werden.

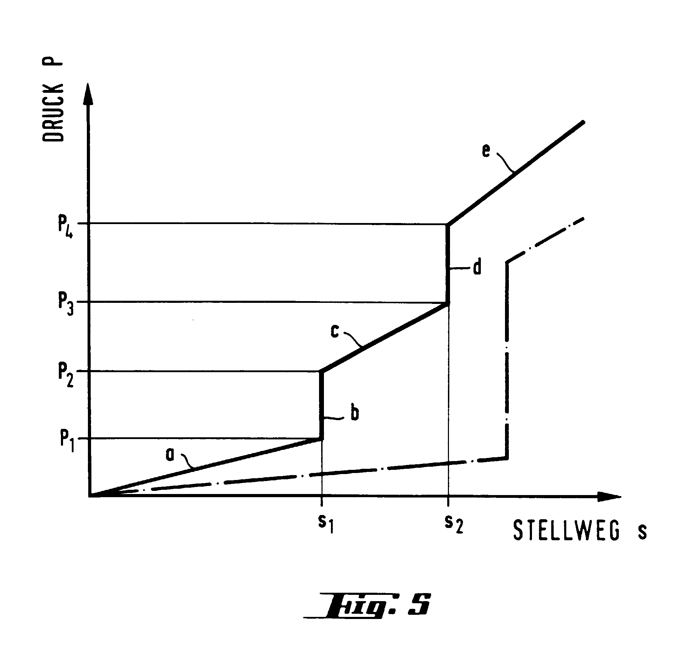

Die Charakteristik eines mehrstufigen Regelventils, so wie es vorstehend beschrieben wurde, ist in Figur 5 wiedergegeben. In Figur 5 ist über dem Stellweg s des mit der Feder 3 in Eingriff stehenden und am längsten beweglichen Teilkolbens eines der vorstehend beschriebenen Ventile in vertikaler Richtung der Systemdruck aufgetragen, wie er im Bereich des Druckanschlusses 26 herrscht und auf die Stirnflächen der Teilkolben wirkt. Wie bereits erwähnt, bewegen sich zunächst, ausgehend von einem sehr niedrigen Druck, der in Figur 5 mit O angenommen ist, und ohne Federvorspannung alle Teilkolben gemeinsam, wobei der Stellweg entsprechend der Federcharakteristik proportional zu der auf die Kolbenstirnflächen wirkenden Kraft ist, die wieder proportional zum Druck ist. Damit ergibt sich in dem Druck-Stellwegdiagramm der Verlauf eines vom Ursprung ausgehenden Geradenabschnittes a. Sobald der erste Teilkolben nach dem Stellweg $s_1$ an seinen Anschlag gerät, bewegt sich auch der zweite Teilkolben zunächst noch nicht weiter, da die Kraft auf seine Stirnfläche bei dem dann herrschenden Druck $P_1$ zunächst noch nicht ausreicht, ihn gegen die Kraft der Feder 3 weiterzubewegen. Der Druck kann also zunächst ohne jede weitere Kolbenverschiebung ansteigen, was durch den ersten senkrechten Abschnitt b des Graphen in Figur 5 veranschaulicht wird. Erst wenn der Druck den Wert $P_2$ erreicht hat, reicht die auf den oder die noch beweglichen Teilkolben wirkende Kraft aus, die Federkraft zu überwinden und der oder die Teilkolben bewegen sich weiter entsprechend dem Abschnitt c des Graphen, bis nach dem Stellweg $s_2$ gegebenenfalls ein weiterer Teilkolben bei einem Druckwert $P_3$ an einen Anschlag stößt, so daß der Druck auch hier wieder ohne weitere Änderung des Stellweges gemäß dem Abschnitt d der Kurve ansteigt, bis ab einem Druck P4 ein gegebenenfalls verbliebener dritter Teilkolben sich entlang des Abschnittes e der Kurve mit zunehmendem Druck weiterbewegt. Wenn die Feder zu Beginn keine Vorspannung hatte und unter der Voraussetzung, daß die Federcharakteristik exakt linear ist, verlaufen die Abschnitte a, c und e jeweils durch den Ursprung des Koordinatensystems in Figur 5. Dabei kann man durch die Position der Anschläge und durch die Federcharakteristik sowie die relativen Flächen der Teilkolben alle Abschnitte a bis d der Kurve auf eine beliebige Länge und Steigung entsprechend der Federcharakteristik einstellen. Es wäre also z.B. ohne weiteres möglich, bei einem Ventil mit beispielsweise zwei Teilkolben auch einen Druck-Stellwegverlauf entsprechend der strichpunktierten Linie einzustellen.

**Patentansprüche**

1. Mehrstufiges Regelventil mit einem Zylinder (1) und einem darin geführten Stellkolben (2), welcher von einer Seite her durch einen Regeldruck beaufschlagbar ist und von der anderen Seite her durch eine Rückstellkraft, z.B. von einer Druckfeder (3) beaufschlagbar ist, wobei der Kolben (2) in Abhängigkeit vom Regeldruck mindestens eine Ausgangsöffnung (41, 42) in der Zylinderwand (11) nicht, teilweise oder ganz freigibt und so über die Ausgangsöffnung (41, 42) eine Verbindung zu der vom Regeldruck beaufschlagten Kolbenseite unterbricht, teilweise oder vollständig herstellt, wobei der Kolben (2) aus mindestens zwei jeweils mit dem Regeldruck beaufschlagbaren Teilkolben (21, 22) besteht, von denen ein erster Teilkolben (21) von der Kraft des Rückstellelementes (3) beaufschlagt ist, dadurch gekennzeichnet daß ein Mitnehmer (5) die Teilkolben (21, 22) derart miteinander verbindet, daß auch der zweite Teilkolben (22) oder weitere Teilkolben über den ersten Teilkolben (21) und den Mitnehmer (5) eine Rückstellkraft erfährt, daß der Zylinder (1) mindestens einen Anschlag (6) für den zweiten oder weiteren Teilkolben (22) aufweist, welcher die Bewegung des zweiten oder weiteren Teilkolbens (22, 23) unter dem Einfluß des Regeldruckkes (P) und gegen die Wirkung des Rückstellelementes (3) begrenzt, während der erste Teilkolben (21) von diesem Anschlag (6) unbeeinflußt bei einem weiteren Anstieg des Regeldruckes (P) gegen das Rückstellelement (3) bewegbar bleibt.

2. Mehrstufiges Regelventil nach Anspruch 1, dadurch gekennzeichnet, daß die Teilkolben (30, 31, 32, 21, 22, 33, 34) konzentrisch zueinander angeordnet und mindestens als ein innerer Teilkolben (21, 30, 34) und ein äußerer Teilkolben (22, 32, 33) vorgesehen und teleskopartig ineinander verschiebbar sind.

3. Regelventil nach Anspruch 2, dadurch gekennzeichnet, daß der äußere Teilkolben (33) von einer Druckfeder (3) als Rückstellelement beaufschlagbar ist, während als Anschlag für den inneren Teilkolben (34) an von einem Boden (8) des Zylinders (1) ausgehenden Zapfen (35) vorgesehen ist.

4. Regelventil nach Anspruch 2, dadurch gekennzeichnet, daß auf den inneren Teilkolben (21, 30, 34) eine Druckfeder (3) als Rückstellelement wirkt, daß die Sackbohrung (7) als unteren Anschlag (6) einen stufenartig sich verjüngenden Durchmesserbereich (16, 17) aufweist, daß der äußere Teilkolben (22, 32, 33) oder der mittlere Teilkolben (31) in dem vom Innenkolben (21, 30, 34) freigebbaren Bereich in seiner Wand eine radiale Bohrung (4, 4', 10) hat, daß der Zylinder (1) in seiner Wand (11) mindestens zwei axial beabstandete Ausgangsöffnungen (41, 42, 43) hat, von denen eine in der Anschlagsposition des äußeren Teilkolbens (22, 32, 33) mit der Öffnung (4, 4') des äußeren Teilkolbens (22, 32, 33) fluchtet, während die andere Öffnung (41) der Zylinderwand (11) vom Rand (22', 32', 33') des äußeren Teilkolbens (22, 32, 33) in dessen Anschlagposition freigegeben wird.

5. Mehrstufiges Regelventil nach einem der Ansprüche 2 bis 4, dadurch gekennzeichnet, daß mindestens drei teleskopartig ineinandergeschobene Teilkolben (30, 31, 32) vorgesehen sind.

6. Mehrstufiges Regelventil nach einem der Ansprüche 1 bis 5, dadurch gekennzeichnet, daß auf axialer Höhe der Ausgangsöffnungen (41, 42, 43) in der Innenwand der Sackbohrung (7) oder der Außenwand des äußeren Teilkolbens (22, 32, 33) umlaufende Ringnuten (12, 13, 14) vorgesehen sind.

## Claims

1. A multi-step control valve with a cylinder (1) and a regulating piston (2) located therein which can be acted upon from one side by a control pressure and can be acted upon from the other side by a restoring force, e.g. by a pressure spring (3), whereby the piston (2) does not release, partly releases or completely releases at least one outlet opening (41, 42) in the cylinder wall (11) in dependence on the control pressure and thereby via the outlet opening (41, 42) interrupts, partly creates or completely creates a connection to the side of the piston acted upon by the control pressure, whereby the piston (2) consists of at least two part pistons (21, 22) which can be acted upon by the control pressure, the first part piston (21) being acted upon by the force of the restoring element (3), characterised in that the part pistons (21, 22) are connected by means of a carrier (5) in such a way that, via the first part piston (21) and the carrier (5), the second piston (22) or further part pistons also experience a restoring force, that the cylinder (1) has at least one stop (6) for the second or further part pistons (22) which limits the movement of the second or further part pistons (22, 23) under the influence of the control pressure (P) and against the effect of the restoring element (3), while the first part piston (21) remains mobile unaffected by this stop (6) if the control pressure (P) against the restoring element (3) is increased further.

2. A multi-step control valve in accordance with Claim 1, characterised in that the part pistons (30, 31, 32, 21, 22, 33, 34) are positioned concentrically in relation to one another, represent at least one inner part piston (21, 30, 34) and one outer part piston (22, 32, 33) and can be moved telescopically one inside the other.

3. A control valve in accordance with Claim 2, characterised in that the outer part piston (33) can be acted upon by a pressure spring (3) as a restoring element, while a peg (35) extending from the base floor (8) of the cylinder (1) is provided as a stop for the inner part piston (34).

4. A control valve in accordance with Claim 2, characterised in that a pressure spring (3) acts as a restoring element upon the inner part piston (21, 30, 34) , that the sack hole (11) has a section with a stepped narrowing diameter (16, 17) as a lower stop, that in the wall of an area of the outer part piston (22, 32, 33) or the centre part piston (3) which can be released by inner pistons (21, 30, 34) is a radial hole (4, 4'), that in the wall (11) of the cylinder (1) are at least two axially spaced outlet openings (41, 42, 43) one of which in the stop position of the outer part piston (22, 32, 33) is flush with the opening (4, 4') of the outer part piston (22, 32, 33), while the other opening (41) in the cylinder wall (11) is released by the edge (22', 32', 33') of the outer part piston (22, 32, 33) in its stop position.

5. A multi-step control valve in accordance with one of Claims 2 to 4, characterised in that it has at least three part pistons (30, 31, 32) positioned telescopically one inside the other.

6. A multi-step control valve in accordance with one of Claims 1 to 5, characterised in that ring grooves (12, 13, 14) run around the inner wall of the sack hole (7) or the outer wall of the outer part piston (22, 32, 33) at the axial level of the outlet openings (41, 42, 43 ).

## Revendications

1. Vanne réglable à plusieurs paliers, comprenant un cylindre (1) et un piston (2) pouvant être positionné et qui est guidé dans celui-ci, à l'un des côtés duquel peut être appliquée une pression de réglage et à l'autre côté duquel peut être appliquée une force de rappel, d'un ressort de compression (3) par exemple, le piston (2) ne découvrant pas, ou découvrant partiellement ou complètement, au moins un orifice de sortie (41, 42) dans la paroi (11) du cylindre, en fonction de la pression de réglage, en coupant ainsi ou en établissant partiellement ou complètement une liaison à travers l'orifice de sortie (41, 42) avec le côté du piston sollicité par la pression de réglage, le piston (2) étant constitué d'au moins deux pistons partiels (21, 22), auxquels peut être appliquée la pression de réglage, dont un premier piston partiel (21) est sollicité par la force de l'élément de rappel (3), caractérisée en ce qu'un entraîneur (5) relie les pistons partiels (21, 22) l'un à l'autre, de manière que le deuxième piston partiel (22) ou d'autres pistons partiels subisse(nt) également une force de rappel, par l'intermédiaire du premier piston partiel (21) et de l'entraineur (5), et que le cylindre (1) présente au moins une butée (6) pour le deuxième piston partiel (22), ou pour d'autres pistons partiels, butée qui limite le mouvement du deuxième piston partiel ou d'autres pistons partiels (22, 23) sous l'influence de la pression de réglage (P) et à l'encontre de l'effet de l'élément de rappel (3), tandis que le premier piston partiel (21), non influencé par cette butée (6), reste déplaçable à l'encontre de l'élément de rappel (3) lors d'une élévation supplémentaire de la pression de réglage (P).

2. Vanne réglable à plusieurs paliers selon la revendication 1, caractérisée en ce que les pistons partiels (30, 31, 32, 21, 22, 33, 34) sont disposés concentriquement entre eux, sont prévus sous forme d'au moins un piston partiel intérieur (21, 30, 34) et un piston partiel extérieur (22, 32, 33) et sont télescopiquement coulissants l'un dans l'autre.

3.  Vanne réglable selon la revendication 2, caractérisée en ce que le piston partiel extérieur (33) peut être chargé par un ressort de compression (3) comme élément de rappel, tandis qu'une saillie (35) s'étendant à partir d'un fond (8) du cylindre est prévue comme butée pour le piston partiel intérieur (34).

4.  Vanne réglable selon la revendication 2, caractérisée en ce qu'un ressort de compression (3) agit en tant qu'élément de rappel sur le piston partiel intérieur (21, 30, 34), que l'alésage borgne (7) avec une butée inférieure (6) un gradin de réduction entre deux zones (16, 17) de diamètres constants, que le piston partiel extérieur (22, 32, 33) ou un piston partiel médian (31) présente un perçage radial (4, 4', 10) dans sa paroi, dans la zone pouvant être dégagée par le piston intérieur (21, 30, 34), et que le cylindre (1) possède, dans sa paroi (11), au moins deux orifices de sortie (41, 42, 43) mutuellement espacés axialement, dont l'un est aligné avec le perçage (4, 4') du piston partiel extérieur (22, 32, 33) à la position en butée de celui-ci, tandis que l'autre orifice de sortie (41) de la paroi (11) du cylindre est démasqué par le bord (22', 32', 33') du piston partiel extérieur (22, 32, 33) à la position en butée de celui-ci.

5.  Vanne réglable à plusieurs paliers selon une des revendications 2 à 4, caractérisée en ce qu'elle comprend au moins trois pistons partiels (30, 31, 32) emboîtés et pouvant coulisser télescopiquement l'un dans l'autre.

6.  Vanne réglable à plusieurs paliers selon une des revendications 1 à 5, caractérisée en ce que des gorges annulaires circonférentielles (12, 13, 14) sont prévues à la hauteur axiale des orifices de sortie (41, 42, 43) dans la paroi interne de l'alésage borgne (7) ou dans la paroi externe du piston partiel extérieur (22, 32, 33).

**Fig. 1**

Fig. 2

**Fig. 3**

**Fig. 4**

*Fig. 5*